# EUROPEAN PATENT SPECIFICATION

(11) **EP 4 496 362 B1**
(45) Date of publication and mention of the grant of the patent: **28.10.2026**
(21) Application number: 24185909.9
(22) Date of filing: 02.07.2024
(51) Int. Cl.: H04W 4/80, G06F 3/12

(54) **CONTROL APPARATUS AND CONTROL METHOD THEREOF, PROGRAM, AND STORAGE MEDIUM**
STEUERUNGSVORRICHTUNG UND STEUERUNGSVERFAHREN DAFÜR, PROGRAMM UND SPEICHERMEDIUM
APPAREIL DE COMMANDE ET PROCÉDÉ DE COMMANDE ASSOCIÉ, PROGRAMME ET SUPPORT DE STOCKAGE

(30) Priority: 20.07.2023 JP 2023118520
(43) Date of publication of application: 22.01.2025
(73) Proprietor: CANON KABUSHIKI KAISHA, Tokyo 146-8501 (JP)
(72) Inventor: SATO, Ayumi, Tokyo, 146-8501 (JP)
(74) Representative: TBK

(56) References cited:
- US-A1- 2015 031 404
- US-A1- 2015 215 973

## Description

### BACKGROUND OF THE INVENTION

### Field of the Invention

The present invention relates to a control apparatus that communicates with an external device.

### Description of the Related Art

In recent years, it has become common for image capturing apparatuses such as digital cameras to have wireless communication functions. By connecting an image capturing apparatus to an information terminal such as a smartphone, a tablet, or the like through wireless communication, the image capturing apparatus can be operated remotely using a camera communication application in the information terminal.

There are also applications that enable a plurality of image capturing apparatuses to be registered, and enable a plurality of the registered image capturing apparatuses to be selected, connected, and operated simultaneously. However, connecting a larger number of image capturing apparatuses results in higher bandwidth usage and lower communication quality, and thus Japanese Patent Laid-Open No. 2020-178323 proposes setting an upper limit value on the number of connected apparatuses, and rejecting wireless connection requests once the upper limit value is reached.

Here, consider a case where, for example, a user newly registers an image capturing apparatus in an information terminal. In this case, it is thought that the user wishes to experimentally connect the newly-registered image capturing apparatus and then register the image capturing apparatus after confirming whether a wireless connection can be established.

However, in such a case, with the technique disclosed in Japanese Patent Laid-Open No. 2020-178323, if a number of image capturing apparatuses corresponding to the upper limit value are already connected, the connection request will be rejected, and the image capturing apparatus therefore cannot be connected experimentally. In other words, the user cannot confirm whether the newly-registered image capturing apparatus can be connected wirelessly.

*Further prior art which relates to this field can be found in document* US 2015 / 215 973 A1*, disclosing a wireless communication device which may form a wireless network in which the wireless communication device operates as a master station, terminate a wireless connection with a target apparatus in a case where a wireless connection request is received from a specific external apparatus under a state of a number of slave apparatuses being equal to an upper limit number K, establish a wireless connection with the specific external apparatus, and perform a wireless communication of first target data with the specific external apparatus by using the wireless network. The wireless communication device may terminate the wireless connection with the specific external apparatus, and establish a wireless connection with the target apparatus via the first wireless communication interface, so as to cause the target apparatus to participate as the slave station in the wireless network again.*

*Further prior art can be found in document* US 2015 / 031 404 A1*, disclosing a function execution apparatus which, when a wireless connection request is received from a specific device in a specific state where wireless connections are established between the function execution apparatus and N devices which are an upper limit number of devices, transmits an inquiry signal to each of K devices among the N devices to inquire whether each device which is a final transmission destination of the inquiry signal activates a specific application program for causing the function execution apparatus to execute a specific function, select a target device, for which the wireless connection is to be disconnected, among the K devices based on a result of the inquiry, disconnect a wireless connection with the target device, and establish a wireless connection with the specific device after the wireless connection with the target device is disconnected.*

### SUMMARY OF THE INVENTION

Having been achieved in light of the aforementioned problem, the present invention provides a control apparatus that can, even when a plurality of external devices are connected, confirm whether another external device can be connected.

According to a first aspect of the present invention, there is provided a control apparatus as specified in claims 1 to *10*.

According to a second aspect of the present invention, there is provided a method of controlling a control apparatus as specified in claim 11.

According to a third aspect of the present invention, there is provided a program as specified in claim 12.

According to a fourth aspect of the present invention, there is provided a computer readable storage medium as specified in claim 13.

Further features of the present invention will become apparent from the following description of exemplary embodiments with reference to the attached drawings.

### BRIEF DESCRIPTION OF THE DRAWINGS

FIG. 1 is a diagram illustrating the system configuration of a communication system according to a first embodiment of the present invention.
FIG. 2 is a block diagram illustrating the configuration of a camera.
FIG. 3 is a block diagram illustrating the configuration of a control apparatus.
FIG. 4 is a flowchart illustrating connection control operations of the control apparatus and the camera according to the first embodiment.
FIGS. 5A to 5D illustrate screens displayed in a display unit in each step of FIG. 4.
FIG. 6 is a flowchart illustrating connection control operations of the control apparatus and the camera according to a second embodiment.

### DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### First Embodiment

### System Configuration

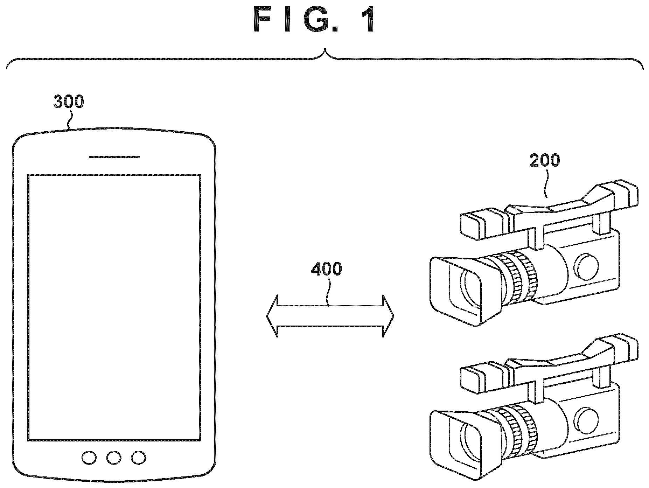

FIG. 1 is a diagram illustrating the system configuration of a communication system according to a first embodiment of the present invention. FIG. 1 illustrates a plurality of cameras 200, which are external devices, and a control apparatus 300 as being communicably connected by communication 400. In the present embodiment, a mobile phone is used as the control apparatus 300, for example.

In FIG. 1, the plurality of cameras 200 are cameras to which the control apparatus 300 is connected. The communication 400 uses Wi-Fi (registered trademark) in the present embodiment, but is not limited thereto. For example, Bluetooth (registered trademark) or a proprietary wireless communication method may be used instead. Alternatively, wired communication may be used instead of wireless communication. In other words, any communication method, such as RS-232C, RS-422A, USB, Ethernet (registered trademark), or the like, can be used in the present embodiment. However, it is necessary for the method to be capable of sending and receiving video and camera setting values.

The "connection" with an external device, including the cameras, by communication 400 includes sending an HTTP request as an access request to the external device and receiving a session as an HTTP response.

### Camera Configuration

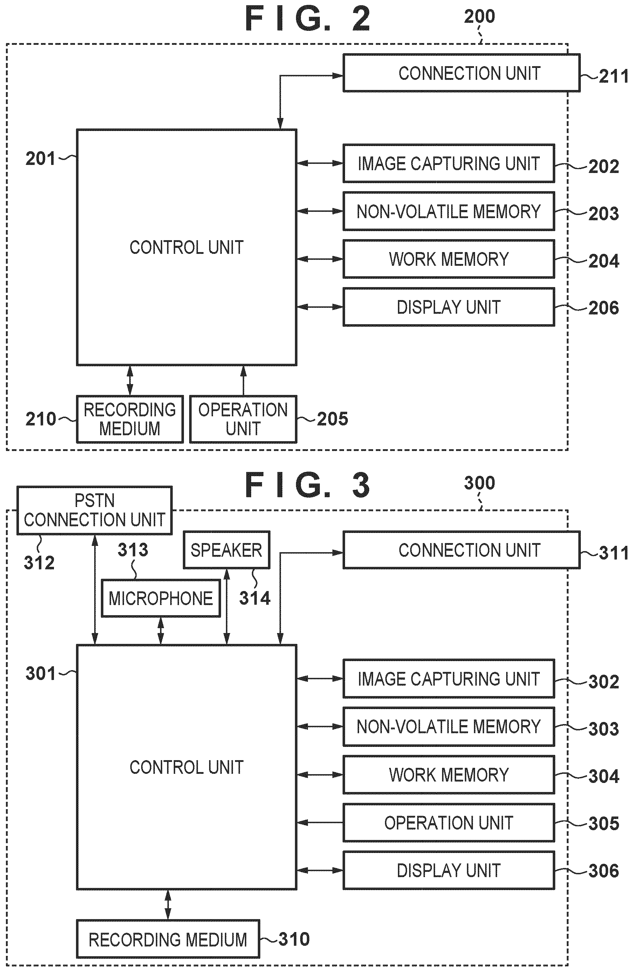

FIG. 2 is a block diagram illustrating an example of the configuration of the camera 200 according to the present embodiment. Although a case where the camera 200 is connected to the control apparatus 300 will be described here, the external device connected to the control apparatus 300 is not limited to a camera. For example, an information processing apparatus such as a tablet device or personal computer may be connected to the control apparatus 300 as the external device.

In FIG. 2, a control unit 201 controls the various parts of the camera 200 in accordance with input signals, programs (described later), and the like. Note that a plurality of pieces of hardware may control the camera 200 as a whole by sharing processing rather than the control unit 201 controlling the camera 200 as a whole.

An image capturing unit 202 converts subject light, formed as an image by a lens included in the image capturing unit 202, into an electrical signal, performs noise reduction processing and the like, and outputs the processed signal as digital image data. The image data obtained through this capturing is stored in a buffer memory, subjected to predetermined computation processing by the control unit 201, and is then recorded into a recording medium 210.

A non-volatile memory 203 is non-volatile memory that can be electrically erased and recorded to, and stores programs and the like (described later) that are executed by the control unit 201.

A work memory 204 is used as buffer memory that temporarily stores the image data captured by the image capturing unit 202, image display memory for a display unit 206, a work region for the control unit 201, and so on.

An operation unit 205 is used for accepting instructions made to in the camera 200 by a user. The operation unit 205 includes operation members such as, for example, a power button for the user to instruct the camera 200 to turn on and off, a release switch for the user to instruct a shot to be taken, a playback button for the user to instruct image data to be played back, and the like. The operation unit 205 also includes a touch panel disposed on the display unit 206 (described later).

Note that the release switch includes a switch SW1 and a switch SW2. Switch SW1 turns on when the release switch is put into what is known as a "half-pressed" state. Shooting preparation processing such as autofocus (AF) processing, automatic exposure (AE) processing, auto white balance (AWB) processing, flash pre-emission (EF) processing, and the like is executed as a result. The switch SW2 turns on when the release switch is put into what is known as a "fully-pressed" state. Shooting processing is executed as a result.

The display unit 206 displays a viewfinder image at the time of shooting, shot image data, and text for interactive operations. The display unit 206 does not necessarily have to be built into the camera 200. It is sufficient for the camera 200 to be capable of connecting to an internal or external display unit 206 and have at least a display control function for controlling the display in the display unit 206.

The recording medium 210 can record image data output from the image capturing unit 202. The recording medium 210 may be configured to be removable from the camera 200, or may be built into the camera 200. In other words, it is sufficient for the camera 200 to at least have means for accessing the recording medium 210.

A connection unit 211 is an interface for connecting to an external device. The camera 200 of the present embodiment can exchange data with the external device through the connection unit 211. In the present embodiment, the connection unit 211 includes an interface for communicating with an external device through wireless LAN. The control unit 201 can communicate wirelessly with the external device by controlling the connection unit 211. Note that the communication method is not limited to wireless LAN.

Note that the camera 200 in the present embodiment can operate as a slave device in wireless LAN communication infrastructure mode. When operating as a slave device, the camera 200 can join a network formed by a nearby access point ("AP" hereinafter) by connecting to the AP. The camera 200 according to the present embodiment can also operate as a simplified AP ("simple AP" hereinafter), which is a type of AP that has more limited functionality. The AP according to the present embodiment is an example of a relay apparatus.

When the camera 200 operates as a simple AP, the camera 200 forms a network by itself. A device in the vicinity of the camera 200 can recognize the camera 200 as an AP and join a network formed by the camera 200. A program for causing the camera 200 to function as described above is held in the non-volatile memory 203.

The camera 200 of the present embodiment is a simple AP that, while being a kind of AP, does not have a gateway function for transferring data received from the slave device to an Internet provider or the like. Accordingly, even if the camera receives data from another apparatus that has joined the network formed by the camera, that data cannot be transferred to a network such as the Internet. Alternatively, the connection unit 211 may be a wired communication interface instead of a wireless communication interface. In other words, the connection unit 211 may be a wired communication interface using any communication method, such as RS-232C, RS-422A, USB, Ethernet (registered trademark), or the like.

The foregoing has described the camera 200. The control apparatus 300, which is an example of an external device, will be described next.

### Configuration of Control Apparatus

FIG. 3 is a block diagram illustrating an example of the configuration of the control apparatus 300 of the present embodiment. Although a mobile phone is described here as an example of the control apparatus 300, the control apparatus 300 is not limited thereto. For example, the control apparatus 300 may be any information processing apparatus, such as a digital camera having wireless functionality, a portable media player, what is known as a tablet device, a personal computer, a smartphone, or the like.

In FIG. 3, a control unit 301 controls the various parts of the control apparatus 300 in accordance with input signals, programs (described later), and the like. Note that a plurality of pieces of hardware may control the control apparatus 300 as a whole by sharing processing rather than the control unit 301 controlling the control apparatus 300 as a whole.

An image capturing unit 302 converts subject light, formed as an image by a lens included in the image capturing unit 302, into an electrical signal, performs noise reduction processing and the like, and outputs the processed signal as digital image data. The image data obtained through this capturing is stored in a buffer memory, subjected to predetermined computation processing by the control unit 301, and is then recorded into a recording medium 310.

A non-volatile memory 303 is non-volatile memory that can be electrically erased and recorded to, and stores an OS (operating system), which is the basic software executed by the control unit 301, various types of programs, and the like. A program for communicating with the camera 200 is also stored in the non-volatile memory 303, and is assumed to be install as a camera communication application.

The processing of the control apparatus 300 according to the present embodiment is realized by loading programs provided by the camera communication application. The camera communication application is assumed to have programs that use the basic functions of the OS installed in the control apparatus 300 (e.g., wireless LAN functions, Bluetooth functions, functions for calling other applications, and the like). The camera communication application also has a remote shooting function in which the user remotely controls the camera 200 with the control apparatus 300 while viewing a live view image obtained from the camera 200 in the control apparatus 300. Furthermore, the camera communication application has a function for viewing image data recorded in the recording medium installed in the camera 200 through a remote operation, a remote viewing function for receiving that image data, and the like. The OS of the control apparatus 300 may have a program for realizing the processing according to the present embodiment.

A work memory 304 is used as a buffer memory that temporarily saves the image data generated by the image capturing unit 302, an image display memory for a display unit 306, a work region for the control unit 301, and so on.

An operation unit 305 is used for accepting instructions made to in the control apparatus 300 by a user. The operation unit 305 includes operation members such as, for example, a power button through which the user instructs the power of the control apparatus 300 to be turned on and off, a touch panel disposed on the display unit 306, and the like.

The display unit 306 displays image data, a text display for interactive operations, and so on. The display unit 306 does not necessarily have to be built into the control apparatus 300. It is sufficient for the control apparatus 300 to be capable of connecting to the display unit 306 and have at least a display control function for controlling the display in the display unit 306.

The recording medium 310 can record image data output from the image capturing unit 302, image data received from the camera 200, and the like. The recording medium 310 may be configured to be removable from the control apparatus 300, or may be built into the control apparatus 300. In other words, it is sufficient for the control apparatus 300 to at least have means for accessing the recording medium 310.

A connection unit 311 is an interface for connecting to an external device. The control apparatus 300 of the present embodiment can exchange data with the external device through the connection unit 311. In the present embodiment, the connection unit 311 includes an interface for communicating with an external device through wireless LAN. The control unit 301 can communicate wirelessly with the external device by controlling the connection unit 311.

Note that the camera 200 according to the present embodiment can at least operate as a slave apparatus in wireless LAN communication infrastructure mode, and can join a network formed by a nearby AP. The camera 200 may also operate as a simple AP, and the control apparatus 300 may join the simple AP of the camera 200.

A PSTN connection unit 312 is an interface used when performing public wireless line communication. The control apparatus 300 can make voice calls, perform data communication, and the like with other devices through the PSTN connection unit 312. When making voice calls, the control unit 301 inputs and outputs audio signals through a microphone 313 and a speaker 314.

The present embodiment assumes that the PSTN connection unit 312 includes an interface for communicating using 3G. Note that the communication system is not limited to 3G, and other, communication systems known as "4G", such as LTE, WiMAX, ADSL, or FTTH, may be used as well. Additionally, it is not absolutely necessary for the connection unit 311 and the PSTN connection unit 312 to be configured as independent pieces of hardware, and it is also possible for these units to share a single antenna, for example.

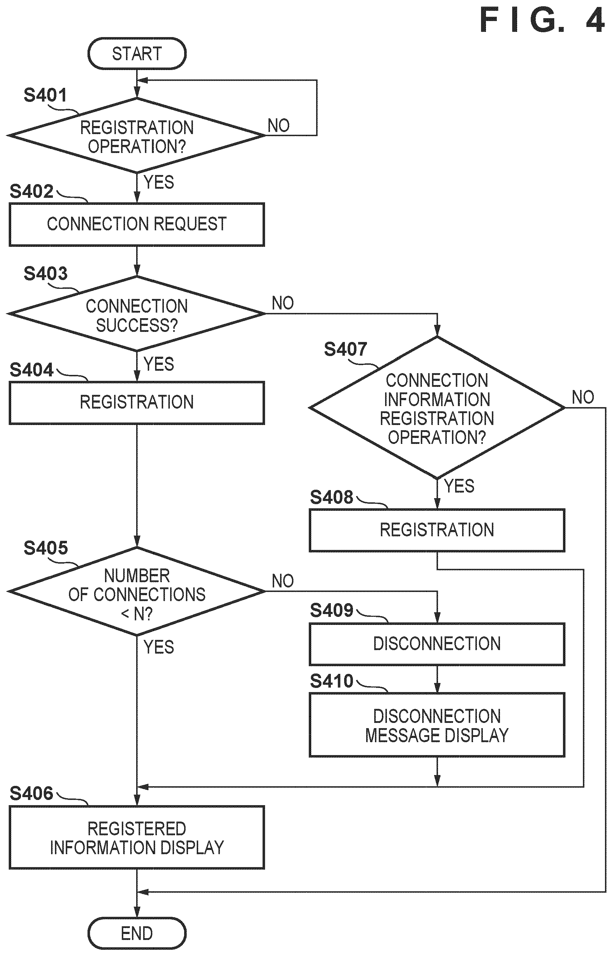

FIG. 4 is a flowchart illustrating operations performed by the control apparatus 300 and the camera 200 in connection control. The operations in FIG. 4 are realized by the control unit 301 of the control apparatus 300 executing a control program stored in the non-volatile memory 303.

In step S401, the control unit 301 determines whether a registration operation has been made in the operation unit 305. The control unit 301 moves the sequence to step S402 if a registration operation has been made, and repeats the processing of step S401 if not.

In step S402, the control unit 301 sends a connection request to the camera 200 through the connection unit 311.

In step S403, the control unit 301 determines whether a connection with the camera 200 has been successfully established in step S402. The control unit 301 moves the sequence to step S404 if a connection has been established, and moves the sequence to step S407 if not.

In step S404, the control unit 301 saves connection information indicating the connection with the camera 200 connected in step S402 in the work memory 204, and registers the camera 200 as a camera that can be connected to the control apparatus 300. The connection information includes at least one of IPv6 or IPv4 information, connection address information, user authentication information, port number information, information on whether SSL communication is used, nickname information, and information on whether the connection was possible.

In step S405, the control unit 301 determines whether the number of cameras 200 currently connected to the control apparatus 300 is less than N (where N is an integer that is 2 or more). The control unit 301 moves the sequence to step S406 if the number is less than N, and moves the sequence to step S409 if not.

In step S406, the control unit 301 displays the connection information that was saved in the work memory 204 in the display unit 206 in step S404. This makes it easier to identify the connected camera 200 and determine when a connection could not be made.

In step S407, the control unit 301 determines whether an operation for registering the connection information has been made in the operation unit 205. The control unit 301 moves the sequence to step S408 if a registration operation has been made, and ends the connection control in this current flow if not. Note that if an operation for registering the connection information has not been made, the control unit 301 may return the sequence to step S401. This makes it easy to redo the registration operation if a connection with the camera 200 could not be established in step S402.

In step S408, the control unit 301 saves the connection information indicating the connection with the camera 200 that sent the connection request in step S402, and information indicating that the camera 200 for which the connection was attempted could not connect, in the work memory 204, and then moves the sequence to step S406.

In step S409, the control unit 301 cuts the connection with the camera 200 connected in step S402, and then moves the sequence to step S410. This makes it possible to confirm whether a connection can be made with the camera 200 that sent the connection request in step S402 while also reducing the impact on the communication quality by reducing the connection time, even when many cameras 200 are connected.

In step S410, the control unit 301 displays, in the display unit 206, an indication that the connection with the connected camera 200 has been cut because at least N cameras 200 are already connected in step S402. This makes it possible to confirm the cause of the connection being cut.

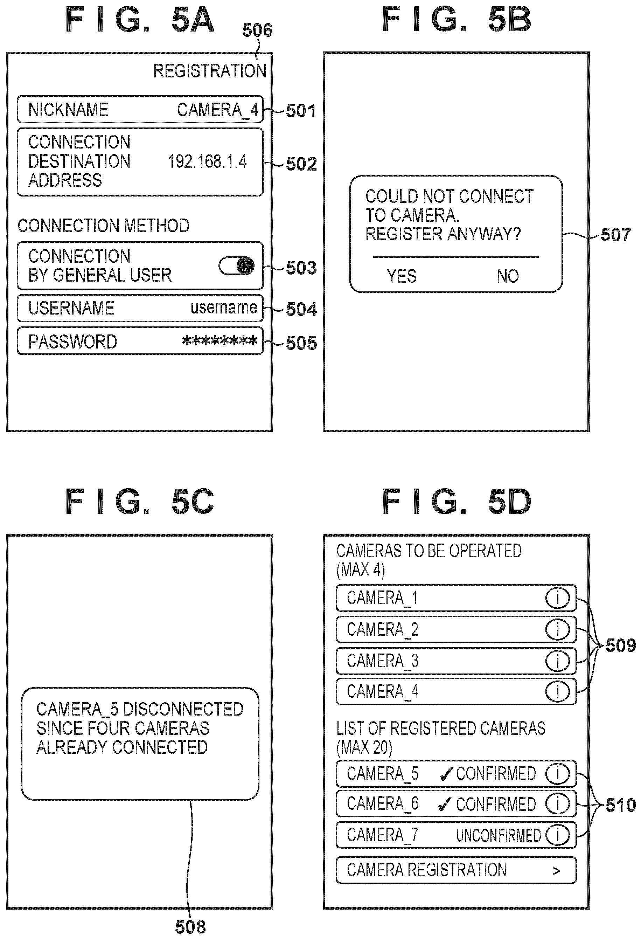

FIGS. 5A to 5D illustrate screens displayed in the display unit 206 in each step of FIG. 4.

FIG. 5A illustrates an example of the display of a screen for performing the registration operation, displayed in step S401. After the registration, a nickname 501 for making it easier to identify the registered camera 200, an address 502 of the connected camera 200, information 503 indicating whether to connect as a general user, a username/password 505 used during connection authentication, and a register button 506 are displayed.

FIG. 5B illustrates an example of the display of a setting screen indicating whether it is necessary to register the connection information, displayed in step S407. A message 507 is displayed which provides an indication that a connection could not be made with the camera 200, and accepts an operation for whether to register the connection information.

FIG. 5C illustrates an example of the display of a screen displayed in step S410. Because at least N cameras 200 (at least four, in this case) are already connected, a message 508 is displayed indicating that the connection has been cut with the camera 200 to which a connection was made to confirm whether a connection is possible.

FIG. 5D illustrates an example of the display of a registered information screen displayed in step S406. Connection information 509 of the connected cameras and connection information 510 of registered cameras are displayed. In this screen example, the nickname and whether or not a connection could be made are displayed as the connection information, but only one piece of the aforementioned connection information, or multiple pieces of the connection information, may be displayed instead.

As described above, according to the present embodiment, it is possible to confirm whether a connection can be made with a camera that is to be newly registered while reducing the impact on communication quality by reducing the connection time, even if the number of cameras already connected to the control apparatus has reached a prescribed number.

### Second Embodiment

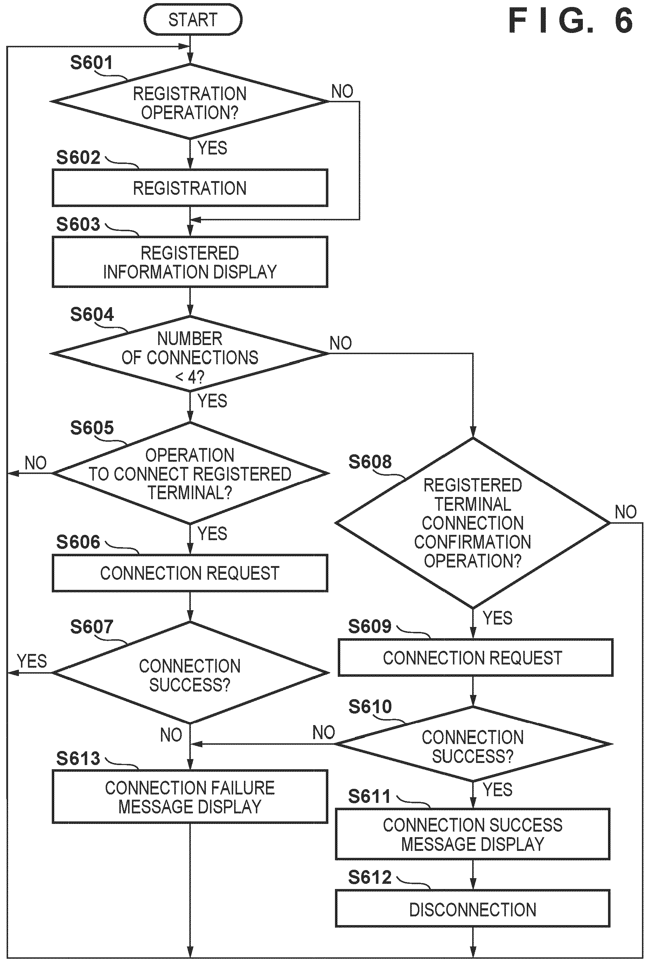

FIG. 6 is a flowchart illustrating operations performed by a communication system according to a second embodiment. Connection control between the control apparatus 300 and the camera 200 according to the second embodiment will be described with reference to FIG. 6. The operations in FIG. 6 are realized by the control unit 301 of the control apparatus 300 executing a control program stored in the non-volatile memory 303.

In step S601, the control unit 301 determines whether a registration operation has been made in the operation unit 305. The control unit 301 moves the sequence to step S602 if a registration operation has been made, and moves the sequence to step S603 if not.

In step S602, the control unit 301 saves the connection information received in the registration operation in step S601 in the work memory 304. Note that the connection information includes at least one of IPv6 or IPv4 information, connection address information, user authentication information, port number information, information on whether SSL communication is used, and nickname information.

In step S603, the control unit 301 displays the connection information that was saved in the work memory 304 in the display unit 306 in step S602.

In step S604, the control unit 301 determines whether the number of cameras 200 currently connected to the control apparatus 300 is less than N (where N is an integer that is 2 or more). The control unit 301 moves the sequence to step S605 if the number is less than N, and moves the sequence to step S608 if not.

In step S605, the control unit 301 determines whether a connection operation has been made in the operation unit 305. The control unit 301 moves the sequence to step S606 if a connection operation has been made, and returns the sequence to step S601 if not.

In step S606, the control unit 301 sends a connection request to the camera 200 through the connection unit 311.

In step S607, the control unit 301 determines whether a connection with the camera 200 has been successfully established in step S606. The control unit 301 returns the sequence to step S601 if a connection has been successfully established, and moves the sequence to step S613 if not.

In step S608, the control unit 301 determines whether a connection confirmation operation has been made in the operation unit 305. The control unit 301 moves the sequence to step S609 if a connection confirmation operation has been made, and returns the sequence to step S601 if not.

In step S609, the control unit 301 sends a connection request to the camera 200 through the connection unit 311.

In step S610, the control unit 301 determines whether a connection with the camera 200 has been successfully established in step S609. The control unit 301 moves the sequence to step S611 if a connection has been successfully established, and moves the sequence to step S613 if not.

In step S611, the control unit 301 displays an indication that the connection is successful in the display unit 306 (notifies the user).

In step S612, the control unit 301 cuts the connection with the camera 200 connected in step S609, and returns the sequence to step S601. This makes it possible to confirm whether a connection can be made with the camera 200 that sent the connection request in step S609 while also reducing the impact on the communication quality by reducing the connection time, even when many cameras 200 are connected.

In step S613, the control unit 301 displays an indication that the connection has failed in the display unit 306 (notifies the user), and saves the information that was saved in the work memory 304 in step S602, having added thereto information indicating that the camera 200 for which a connection was attempted could not be connected.

As described above, according to the present embodiment, it is possible to confirm whether a connection can be made with a camera that is to be newly registered while reducing the impact on communication quality by reducing the connection time, even if the number of cameras already connected to the control apparatus has reached a prescribed number, in the same manner as in the first embodiment.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary *embodiments.*

## Claims

1. A control apparatus (300) comprising:
communication means (311) capable of communicably connecting to a plurality of external devices (200);
first determination means (301) configured to determine a total number of the external devices (200) connected by the communication means (311); and
control means (301) configured to determine, in case the first determination means (301) determines that the total number of the external devices (200) connected is at least a predetermined number, whether a connection confirmation operation has been made by a user; wherein
said communication means (311) is configured to establish, in case said connection confirmation operation has been made by said user, a connection with a predetermined external device (200);
said control means (301) is configured to notify, in case said connection with said predetermined external device (200) has been successfully established, said user that the connection is successful; and
said control means (301) is configured to cut the connection with the predetermined external device (200) after the connection with the predetermined external device (200) has been established by the communication means (311).

2. The control apparatus (300) according to claim 1,
wherein the connection with the predetermined external device (200) is established in response to an operation for registering the predetermined external device (200) in the control apparatus (300).

3. The control apparatus (300) according to claim 1, further comprising:
notification means (306) for notifying a user that the connection with the predetermined external device (200) has been cut.

4. The control apparatus (300) according to claim 1, further comprising:
holding means (304) for holding connection information that is information regarding connections with the external devices (200).

5. The control apparatus (300) according to claim 4, further comprising:
second determination means (301) for determining whether the connection with the predetermined external device (200) has been successfully established,
wherein the holding means (304) further holds information on whether a connection with the predetermined external device (200) is possible based on the determination made by the second determination means (301).

6. The control apparatus (300) according to claim 5,
wherein when the connection with the predetermined external device (200) is not possible, the holding means (304) holds the connection information in response to an instruction from a user.

7. The control apparatus (300) according to claim 5, further comprising:
display means (306) for displaying the connection information held in the holding means (304).

8. The control apparatus (300) according to claim 7,
wherein the display means (306) further displays information indicating whether a connection with the predetermined external device (200) is possible.

9. The control apparatus (300) according to claim 4,
wherein the connection information includes at least one of IPv6 or IPv4 information, connection address information, user authentication information, port number information, information on whether SSL communication is used, nickname information, and information on whether a connection was possible.

10. The control apparatus (300) according to claim 1,
wherein the connection with the external device (200) includes sending an HTTP request as an access request to the external device (200) and receiving a session as an HTTP response.

11. A method for controlling a control apparatus (300), the control apparatus (300) including communication means (311) capable of communicably connecting to a plurality of external devices (200), the method comprising:
executing (S604) a first determination of determining a total number of the external devices (200) connected by the communication means (311);
determining (S608), in case the first determination determines that the total number of the external devices (200) connected is at least a predetermined number, whether a connection confirmation operation has been made by a user;
establishing (S609), in case said connection confirmation operation has been made by said user, a connection with a predetermined external device (200);
notifying (S611), in case said connection with said predetermined external device (200) has been successfully established, said user that the connection is successful; and
executing (S612) control of cutting the connection with the predetermined external device (200) after the connection with the predetermined external device (200) has been established by the communication means (311).

12. A program that causes a computer to function as the respective means of the control apparatus (300) according to any one of claims 1 to 10.

13. A non-transitory computer-readable storage medium in which is stored a program that causes a computer to function as the respective means of the control apparatus (300) according to any one of claims 1 to 10.

## Patentansprüche

1. Steuergerät (300) mit:
einer Kommunikationseinrichtung (311), die dazu in der Lage ist, sich mit einer Vielzahl von externen Geräten (200) kommunikationsfähig zu verbinden;
einer ersten Bestimmungseinrichtung (301), die dazu eingerichtet ist, um eine Gesamtanzahl der durch die Kommunikationseinrichtung (311) verbundenen externen Geräte (200) zu bestimmen; und
einer Steuereinrichtung (301), die dazu eingerichtet ist, um in einem Fall, dass die erste Bestimmungseinrichtung (301) bestimmt, dass die Gesamtanzahl der verbundenen externen Geräte (200) zumindest eine vorbestimmte Anzahl ist, zu bestimmen, ob eine Verbindungsbestätigungsbedienung durch einen Benutzer vorgenommen ist;
wobei
die Kommunikationseinrichtung (311) dazu eingerichtet ist, um in einem Fall, dass die Verbindungsbestätigungsoperation durch den Benutzer vorgenommen ist, eine Verbindung mit einem vorbestimmten externen Gerät (200) herzustellen;
die Steuereinrichtung (301) dazu eingerichtet ist, um in einem Fall, dass die Verbindung mit dem vorbestimmten externen Gerät (200) erfolgreich hergestellt ist, den Benutzer darüber zu benachrichtigen, dass die Verbindung erfolgreich ist; und
die Steuereinrichtung (301) dazu eingerichtet ist, um die Verbindung mit dem vorbestimmten externen Gerät (200) zu trennen, nachdem die Verbindung mit dem vorbestimmten externen Gerät (200) durch die Kommunikationseinrichtung (311) hergestellt ist.

2. Steuergerät (300) nach Anspruch 1,
wobei die Verbindung mit dem vorbestimmten externen Gerät (200) in Reaktion auf eine Bedienung für ein Registrieren des vorbestimmten externen Geräts (200) in dem Steuergerät (300) hergestellt ist.

3. Steuergerät (300) nach Anspruch 1, ferner mit:
einer Benachrichtigungseinrichtung (306) für ein Benachrichtigen eines Benutzers, dass die Verbindung mit dem vorbestimmten externen Gerät (200) getrennt ist.

4. Steuergerät (300) nach Anspruch 1, ferner mit:
einer Halteeinrichtung (304) für ein Halten von Verbindungsinformationen, die Informationen bezüglich Verbindungen mit den externen Geräten (200) sind.

5. Steuergerät (300) nach Anspruch 4, ferner mit:
einer zweiten Bestimmungseinrichtung (301) für ein Bestimmen, ob die Verbindung mit dem vorbestimmten externen Gerät (200) erfolgreich hergestellt ist,
wobei die Halteeinrichtung (304) ferner Informationen darüber hält, ob eine Verbindung mit dem vorbestimmten externen Gerät (200) möglich ist, basierend auf der durch die zweite Bestimmungseinrichtung (301) vorgenommenen Bestimmung.

6. Steuergerät (300) nach Anspruch 5,
wobei, wenn die Verbindung mit dem vorbestimmten externen Gerät (200) nicht möglich ist, die Halteeinrichtung (304) die Verbindungsinformationen in Reaktion auf eine Anweisung von einem Benutzer hält.

7. Steuergerät (300) nach Anspruch 5, ferner mit:
einer Anzeigeeinrichtung (306) für ein Anzeigen der in der Halteeinrichtung (304) gehaltenen Verbindungsinformationen.

8. Steuergerät (300) nach Anspruch 7,
wobei die Anzeigeeinrichtung (306) ferner Informationen anzeigt, die angeben, ob eine Verbindung mit dem vorbestimmten externen Gerät (200) möglich ist.

9. Steuergerät (300) nach Anspruch 4,
wobei die Verbindungsinformationen zumindest eines aus IPv6- oder IPv4-Informationen, Verbindungsadressinformationen, Benutzerauthentifizierungsinformationen, Portnummerninformationen, Informationen darüber, ob SSL-Kommunikation verwendet ist, Spitznameninformationen, und Informationen darüber, ob eine Verbindung möglich war, beinhalten.

10. Steuergerät (300) nach Anspruch 1,
wobei die Verbindung mit dem externen Gerät (200) ein Senden einer HTTP-Anforderung als eine Zugriffsanforderung an das externe Gerät (200) und ein Empfangen einer Sitzung als eine HTTP-Antwort beinhaltet.

11. Verfahren für ein Steuern eines Steuergeräts (300), wobei das Steuergerät (300) eine Kommunikationseinrichtung (311) aufweist, die dazu in der Lage ist, sich mit einer Vielzahl von externen Geräten (200) kommunikationsfähig zu verbinden, wobei das Verfahren aufweist:
Ausführen (S604) einer ersten Bestimmung eines Bestimmens einer Gesamtanzahl der durch die Kommunikationseinrichtung (311) verbundenen externen Geräte (200);
Bestimmen (S608), in einem Fall, dass die erste Bestimmung bestimmt, dass die Gesamtanzahl der verbundenen externen Geräte (200) zumindest eine vorbestimmte Anzahl ist, ob eine Verbindungsbestätigungsbedienung durch einen Benutzer vorgenommen ist;
Herstellen (S609), in einem Fall, dass die Verbindungsbestätigungsbedienung durch den Benutzer vorgenommen ist, einer Verbindung mit einem vorbestimmten externen Gerät (200);
Benachrichtigen (S611), in einem Fall, dass die Verbindung mit dem vorbestimmten externen Gerät (200) erfolgreich hergestellt ist, des Benutzers, dass die Verbindung erfolgreich ist; und
Ausführen (S612) einer Steuerung eines Trennens der Verbindung mit dem vorbestimmten externen Gerät (200), nachdem die Verbindung mit dem vorbestimmten externen Gerät (200) durch die Kommunikationseinrichtung (311) hergestellt ist.

12. Programm, das einen Computer dazu veranlasst, als die jeweiligen Einrichtungen des Steuergeräts (300) nach einem der Ansprüche 1 bis 10 zu fungieren.

13. Nicht-flüchtiges computerlesbares Speichermedium, in dem ein Programm gespeichert ist, das einen Computer dazu veranlasst, als die jeweiligen Einrichtungen des Steuergeräts (300) nach einem der Ansprüche 1 bis 10 zu fungieren.

## Revendications

1. Appareil de commande (300) comprenant :
des moyens de communication (311) aptes à se connecter en communication à une pluralité de dispositifs externes (200) ;
des premiers moyens de détermination (301) configurés pour déterminer un nombre total des dispositifs externes (200) connectés par les moyens de communication (311) ; et
des moyens de commande (301) configurés pour déterminer, au cas où les premiers moyens de détermination (301) déterminent que le nombre total des dispositifs externes (200) connectés est au moins un nombre prédéterminé, si une opération de confirmation de connexion a été effectuée par un utilisateur ; dans lequel
lesdits moyens de communication (311) sont configurés pour établir, dans le cas où ladite opération de confirmation de connexion a été effectuée par ledit utilisateur, une connexion avec un dispositif externe prédéterminé (200) ; lesdits moyens de commande (301) sont configurés pour notifier, dans le cas où ladite connexion avec ledit dispositif externe prédéterminé (200) a été établie avec succès, audit utilisateur que la connexion est réussie ; et
lesdits moyens de commande (301) sont configurés pour couper la connexion avec le dispositif externe prédéterminé (200) après que la connexion avec le dispositif externe prédéterminé (200) a été établie par les moyens de communication (311).

2. Appareil de commande (300) selon la revendication 1, dans lequel la connexion avec le dispositif externe prédéterminé (200) est établie en réponse à une opération d'enregistrement du dispositif externe prédéterminé (200) dans l'appareil de commande (300).

3. Appareil de commande (300) selon la revendication 1, comprenant en outre :
des moyens de notification (306) permettant de notifier à un utilisateur que la connexion avec le dispositif externe prédéterminé (200) a été coupée.

4. Appareil de commande (300) selon la revendication 1, comprenant en outre :
des moyens de conservation (304) permettant de conserver des informations de connexion qui sont des informations concernant des connexions avec les dispositifs externes (200).

5. Appareil de commande (300) selon la revendication 4, comprenant en outre :
des seconds moyens de détermination (301) permettant de déterminer si la connexion avec le dispositif externe prédéterminé (200) a été établie avec succès,
dans lequel les moyens de conservation (304) contiennent en outre des informations sur la possibilité ou non d'une connexion avec le dispositif externe prédéterminé (200) sur la base de la détermination effectuée par les seconds moyens de détermination (301).

6. Appareil de commande (300) selon la revendication 5, dans lequel lorsque la connexion avec le dispositif externe prédéterminé (200) n'est pas possible, les moyens de maintien (304) conservent les informations de connexion en réponse à une instruction d'un utilisateur.

7. Appareil de commande (300) selon la revendication 5, comprenant en outre :
des moyens d'affichage (306) permettant d'afficher les informations de connexion conservées dans les moyens de conservation (304).

8. Appareil de commande (300) selon la revendication 7, dans lequel les moyens d'affichage (306) affichent en outre des informations indiquant si une connexion avec le dispositif externe prédéterminé (200) est possible.

9. Appareil de commande (300) selon la revendication 4, dans lequel les informations de connexion incluent au moins une parmi des informations IPv6 ou IPv4, des informations d'adresse de connexion, des informations d'authentification d'utilisateur, des informations de numéro de port, des informations sur l'utilisation ou non d'une communication SSL, des informations de surnom et des informations sur la possibilité ou non d'une connexion.

10. Appareil de commande (300) selon la revendication 1, dans lequel la connexion avec le dispositif externe (200) inclut l'envoi d'une demande HTTP en tant que demande d'accès au dispositif externe (200) et la réception d'une session en tant que réponse HTTP.

11. Procédé de commande d'un appareil de commande (300), l'appareil de commande (300) incluant des moyens de communication (311) aptes à se connecter en communication à une pluralité de dispositifs externes (200), le procédé comprenant :
l'exécution (S604) d'une première détermination consistant à déterminer un nombre total des dispositifs externes (200) connectés par les moyens de communication (311) ;
la détermination (S608), au cas où la première détermination détermine que le nombre total des dispositifs externes (200) connectés est au moins un nombre prédéterminé, qu'une opération de confirmation de connexion a été effectuée par un utilisateur ;
l'établissement (S609), dans le cas où ladite opération de confirmation de connexion a été effectuée par ledit utilisateur, d'une connexion avec un dispositif externe prédéterminé (200) ;
la notification (S611), au cas où ladite connexion avec ledit dispositif externe prédéterminé (200) a été établie avec succès, audit utilisateur que la connexion est réussie ; et
l'exécution (S612) d'une commande de coupure de la connexion avec le dispositif externe prédéterminé (200) après que la connexion avec le dispositif externe prédéterminé (200) a été établie par les moyens de communication (311).

12. Programme qui amène un ordinateur à fonctionner comme moyens respectifs de l'appareil de commande (300) selon l'une quelconque des revendications 1 à 10.

13. Support de stockage non transitoire lisible par ordinateur dans lequel est stocké un programme qui amène un ordinateur à fonctionner comme moyens respectifs de l'appareil de commande (300) selon l'une quelconque des revendications 1 à 10.
